# EUROPEAN PATENT APPLICATION

(11) **EP 4 750 034 A1**
(43) Date of publication of application: **27.05.2026**
(21) Application number: 25215804.3
(22) Date of filing: 14.11.2025
(51) Int. Cl.: H04L 67/51, H04B 5/20, H04B 5/77, H04W 4/80, H04L 9/40

(54) **INTELLIGENT APPLICATION IDENTIFIER SELECTION IN A NEAR-FIELD COMMUNICATION SYSTEM**

(30) Priority: 26.11.2024 CN 202411707040
(71) Applicant: STMicroelectronics International N.V., 1228 Plan-les-Ouates, Geneva (CH)
(72) Inventor: XIONG, Timon, 200241 Shanghai (CN); WU, Gang, 200241 Shanghai (CN)
(74) Representative: Cabinet Beaumont

(57) **Abstract**

An example near-field communication (NFC) tag device, NFC card emulation device, and a method for initializing an NFC application protocol at an NFC communication listener are provided. The example NFC tag device includes one or more applications and an NFC transceiver. The one or more applications, each include a unique application identifier. The NFC transceiver is configured to receive an application identifier polling command from an NFC reader, wherein the application identifier polling command comprises a first application identifier and transmit a second application identifier corresponding to a supported application of the one or more applications.

## Description

### TECHNOLOGICAL FIELD

Embodiments of the present disclosure relate generally to communication within a near-field communication (NFC) system, and more particularly, to selection of an application identifier (ID) during NFC transaction initialization.

### BACKGROUND

Near-field communication (NFC) is a short-range wireless communication technology that enables communication between NFC enabled devices in close proximity. NFC may be utilized to facilitate authenticating credit cards, enabling physical access, transferring files, enabling communication links, and so on. In general, NFC devices utilize application IDs to identify specific applications supported on nearby NFC devices. Identification of NFC applications by application ID may inform an NFC reader device of standard protocols and procedures when interacting with the identified NFC listener device.

Applicant has identified many technical challenges and difficulties associated with initialization of an NFC transaction and the exchange of application IDs. Through applied effort, ingenuity, and innovation, Applicant has solved problems related NFC transaction initialization by developing solutions embodied in the present disclosure, which are described in detail below.

### BRIEF SUMMARY

Various embodiments are directed to an example NFC tag device, NFC card emulation device, and a method for initializing an NFC application protocol at an NFC communication listener. An example near-field communication tag device is provided. The example near-field communication tag device comprising one or more applications and a near-field communication transceiver. The one or more applications, each comprise a unique application identifier. The near-field communication transceiver, configured to: receive an application identifier polling command from a near-field communication reader, wherein the application identifier polling command comprises a first application identifier; and transmit a second application identifier corresponding to a supported application of the one or more applications.

In some embodiments, the second application identifier is transmitted to the near-field communication reader during an application identifier polling phase of a near-field communication transaction initialization.

In some embodiments, the second application identifier is a truncated application identifier.

In some embodiments, the near-field communication tag device further comprises a memory device, wherein the memory device comprises a table of one or more application identifiers.

In some embodiments, the table of one or more application identifiers comprises associations between a plurality of application identifiers.

In some embodiments, the associations are based on an application type associated with the plurality of application identifiers.

In some embodiments, the second application identifier associated with the supported application is selected based on the application type of the first application identifier.

A near-field communication card emulation device is further provided. The near-field communication card emulation device comprising one or more applications and a near-field communication transceiver. Each of the one or more applications comprises a unique application identifier. The near-field communication transceiver, configured to: receive an application identifier polling command from a near-field communication reader, wherein the application identifier polling command comprises a first application identifier; and transmit a second application identifier corresponding to a supported application of the one or more applications.

In some embodiments, the near-field communication card emulation device comprises a mobile communication device.

In some embodiments, the second application identifier is transmitted to the near-field communication reader during an application identifier polling phase of a near-field communication initialization.

In some embodiments, the second application identifier is a truncated application identifier.

In some embodiments, the near-field communication card emulation device further comprises a memory device, wherein the memory device comprises a table of one or more application identifiers.

In some embodiments, the table of one or more application identifiers comprises associations between a plurality of application identifiers.

In some embodiments, the associations are based on an application type associated with the plurality of application identifiers.

In some embodiments, the second application identifier associated with the supported application is selected based on the application type of the first application identifier.

An example method for initializing an NFC application protocol at a near-field communication listener comprising one or more applications is further provided. In some embodiments, the method comprises: receiving, at a near-field communication transceiver, an application identifier polling command from a near-field communication reader, wherein the application identifier polling command comprises a first application identifier; determining a second application identifier corresponding to a supported application, based at least in part on the first application identifier; and transmitting to the near-field communication reader, the second application identifier corresponding to the supported application of the one or more applications.

In some embodiments, the second application identifier is transmitted to the near-field communication reader during an application identifier polling phase of a near-field communication initialization.

The method of claim 16, wherein the second application identifier is a truncated application identifier.

The method of claim 16, further comprising storing a table comprising associations between a plurality of application identifiers at a memory device, wherein the associations are based on an application type associated with the plurality of application identifiers.

The method of claim 19, wherein determining the second application identifier further comprises: accessing a list of application identifiers based on the application type associated with the first application identifier; and programmatically selecting the second application identifier from the list of application identifiers.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a block diagram of an example NFC system in accordance with an example embodiment of the present disclosure.
FIG. 2 illustrates a block diagram of an additional embodiment of an example NFC system in accordance with an example embodiment of the present disclosure.
FIG. 3 illustrates an example block diagram of an example NFC system wherein the NFC listener accesses an application ID table in accordance with an example embodiment of the present disclosure.
FIG. 4 depicts an example NFC transaction initialization.
FIG. 5 depicts example application IDs for an example NFC system in accordance with an example embodiment of the present disclosure.
FIG. 6 depicts an example NFC transaction initialization in accordance with an example embodiment of the present disclosure.
FIG. 7 illustrates an example flow diagram of an example method for initializing an NFC application protocol at an NFC listener in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with initializing an NFC application protocol. As understood by those of skill in the field to which the present disclosure pertains, there are numerous example scenarios in which an NFC system may benefit from improvements in the initialization of an NFC application protocol.

In general, NFC is a short-range wireless communication technology that enables communication between NFC enabled devices in close proximity. NFC may be utilized to facilitate authenticating credit cards, enabling physical access, transferring files, enabling communication links, and so on. In general, NFC devices utilize application IDs to identify specific applications supported on nearby NFC devices. Identification of NFC applications by application ID may inform an NFC reader device of standard NFC application protocols and procedures when interacting with the identified NFC listener device.

An NFC transaction may be initiated between an NFC reader and an NFC listener once an NFC connection is established. In general, an NFC connection is established through an NFC detect phase, an NFC activation phase, application ID polling, and authentication. During application ID polling, an NFC reader cycles through a list of supported application IDs, one by one, querying whether the detected NFC listener supports the specific NFC application protocol indicated by the application ID. In other words, during the polling stage, the NFC reader essentially asks the NFC listener, "Are you an AAA application?"; "Are you a BBB application?"; Are you a CCC application?"; and so on, until the NFC listener answers "yes." The polling process may be time consuming, particularly if the NFC reader supports multiple protocols. The polling process may delay initiation of the NFC transaction, leading to a negative customer experience.

Some examples have designed enhanced polling operations, for example, by transmitting specialized commands during the NFC detect phase of the NFC transaction initialization. Specialized commands may require specialized hardware configured to receive and transmit the enhanced polling operations. In addition, added specialized commands may add to the overall NFC transaction initialization time.

The various example embodiments of the present disclosure utilize various techniques to improve NFC transaction initialization time and efficiency in an NFC system. For example, in some embodiments, an NFC listener may be configured to detect an application ID transmitted by an NFC reader during NFC transaction initialization and transmit an application ID of an application supported by the NFC listener in response to the received application ID polling command.

Further, in some embodiments, particularly in an instance in which an NFC listener supports a plurality of applications, the NFC listener may comprise a memory device configured to store one or more associations between supported application IDs and unsupported application IDs. For example, an application ID may be associated with an application type. In such an instance, a supported application ID may be associated with unsupported application IDs of the same application type. In an instance in which an NFC reader transmits an application ID polling command comprising an application identifier associated with a particular application type, the NFC listener may reference the memory device and determine a support application ID of the same application type and transmit the supported application ID to the NFC reader.

By transmitting supported application IDs in response to an application ID polling command, an NFC transaction initialization may eliminate unnecessary exchanges between an NFC reader and NFC listener during NFC application ID polling. As a result of the herein described example embodiments and in some examples, the efficiency of an NFC transaction initialization may be greatly improved. Reducing the NFC transaction initialization time may further reduce power consumption of NFC devices and increase user satisfaction.

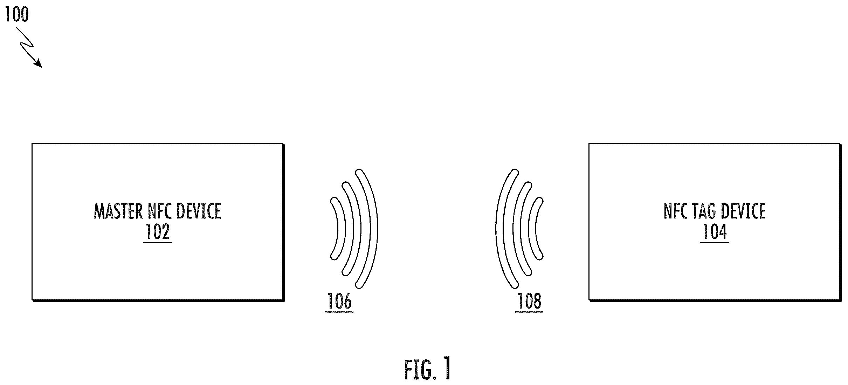

Referring now to FIG. 1, an example NFC system 100 is provided. As depicted in FIG. 1, the example NFC system 100 includes a master NFC device 102 and an NFC tag device 104. The master NFC device 102 is configured to transmit NFC control signals 106 to the NFC tag device 104 and receive NFC responsive signals 108 from the NFC tag device 104.

As depicted in FIG. 1, the example NFC system 100 includes a master NFC device 102. A master NFC device 102 includes one or more electromagnetic coils configured to generate an electromagnetic radio frequency field to facilitate the transmission of data encoded in radio frequency waves and/or electromagnetic fields (e.g., NFC control signals 106). The master NFC device 102 may be referred to as a reader, emitter, initiator, poller, or another similar name. The master NFC device 102 is configured with a power source to generate the electromagnetic radio frequency field.

A master NFC device 102 is configured to initiate an NFC transaction initialization process upon detection of an NFC enabled device (e.g., NFC tag device 104) in the vicinity of the master NFC device 102. An NFC transaction initialization process may include various initialization phases, for example, an NFC detect phase, an NFC activation phase, an NFC application ID polling phase, and an NFC authentication phase.

During an NFC detect phase, the master NFC device 102 may use various processes to detect the presence of a potential nearby NFC listener (e.g., NFC tag device 104). For example, a master NFC device 102 may utilize the transmission of one or more wake-up signals and monitor changes in the electrical parameters in or around the master NFC device 102 to determine if a potential NFC listener device is within a transmission distance. Monitored electrical parameters may include impedance, power loss, transfer efficiency, current, voltage, phase difference between current and voltage, coil quality factor, and so on. Changes to one or more of these electrical parameters based on the transmitted wake-up signal may be an indicator of an NFC listener device within a transmission distance.

Once a nearby NFC listener device is detected, the master NFC device 102 may transmit various polling commands to obtain characteristics of the NFC listener necessary to complete the NFC transaction. For example, a master NFC device 102 may transmit multiple polling commands configured to communicate with different types of NFC listener devices, for example type A cards, type B cards, type F cards, type V cards, etc. In passive mode, the polling command may provide the power required by a passive receiving device (e.g., NFC tag device, NFC card device) to transmit a response. A polling command is used by the master NFC device 102 to detect valid NFC devices within transmission proximity of the master NFC device 102.

During the NFC detect phase, the master NFC device 102 and the NFC listener device may exchange various NFC signals to coordinate the NFC transaction. For example, the master NFC device 102 may transmit anti-collision signals, such as an REQA signal. The master NFC device 102 may then receive NFC responsive signals (e.g., NFC responsive signals 108) from the NFC listener, such as ATQA, UID, and SAK signals.

The NFC transaction initialization process may further include an NFC activation phase. During the NFC activation phase the master NFC device 102 utilizes the UID provided by a selected NFC listener to activate the selected NFC listener. The NFC activation phase may include transmission of a request for answer to select (RATS) NFC control signal 106 by the master NFC device 102 and an answer to select (ATS) NFC responsive signal 108 by the NFC listener.

The NFC transaction initialization may continue with an NFC application ID polling phase. During the NFC application ID polling phase, the master NFC device 102 transmits application identifier polling commands comprising application IDs of applications supported by the master NFC device 102. An application identifier polling command may be any NFC control signal 106 transmitted by the master NFC device 102 to indicate an application supported by the master NFC device 102. For example, the master NFC device 102 may support a plurality of applications, each identified by a unique application ID. The master NFC device 102 may be configured to traverse the list of supported applications and transmit an application identifier polling command with an application ID of a supported application one at a time. Between transmission of each application ID, the master NFC device may listen for an NFC responsive signal 108 indicating if the particular application, identified by the application ID, is supported by the NFC listener.

In embodiments in which the master NFC device 102 supports a plurality of applications, the process of traversing the list of supported applications, transmitting the application ID, and listening for a response from the NFC listener, may be time consuming.

The NFC transaction initialization completes with an NFC authentication phase. During the NFC authentication phase, the master NFC device and NFC listener exchange various NFC signals to authenticate and/or secure the NFC transaction.

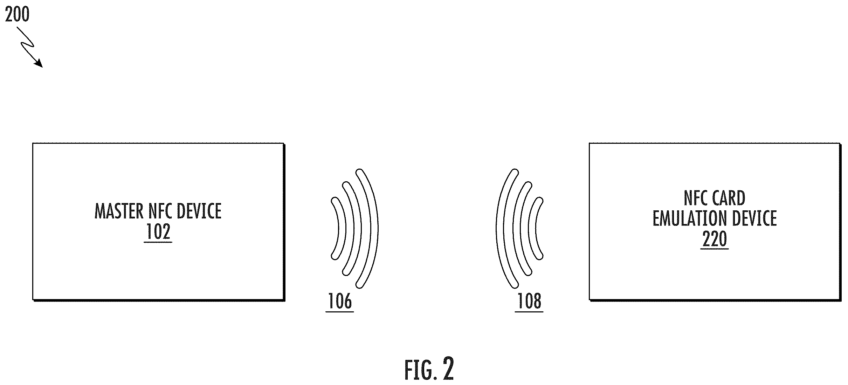

As further depicted in FIG. 1, the NFC system 100 includes an NFC tag device 104. An NFC tag device 104 comprises one or more electrical components comprising an NFC transceiver configured to transmit NFC responsive signals 108 to a master NFC device 102 in response to specific instructions and receive NFC control signals 106 from a master NFC device 102. An NFC transceiver is any device configured to transmit and receive signals in accordance with an NFC transaction. In some embodiments, an NFC tag device 104 may be a passive device powered by the magnetic field generated by the master NFC device 102. NFC tag devices 104 may also be referred to as listeners. In some embodiments, an NFC tag device 104 may comprise an NFC card emulation device. An NFC card emulation device is discussed further in relation to FIG. 2.

An NFC tag device 104 may comprise one or more applications. An application may include standard protocols and procedures defining an NFC transaction between the master NFC device 102 and the application on the NFC tag device 104. An application may comprise an application type and/or subtype. An application type may include any grouping of one or more applications. An application type may be defined by an industry standard. In some embodiments, an application type may be defined specific to the NFC tag device 104. Application types may include authentication applications, consumer engagement applications, access control applications, asset tracking applications, home automation applications, metering applications, lighting applications, and so on. Application subtypes may comprise any grouping within an application type. Example subtypes of a consumer engagement applications may include credit card applications, mobile banking applications, payment applications, ticketing applications, and so on. Application subtypes of access control may include car key applications, smart lock applications, garage door applications, and so on. Each application type and subtype may include a plurality of applications.

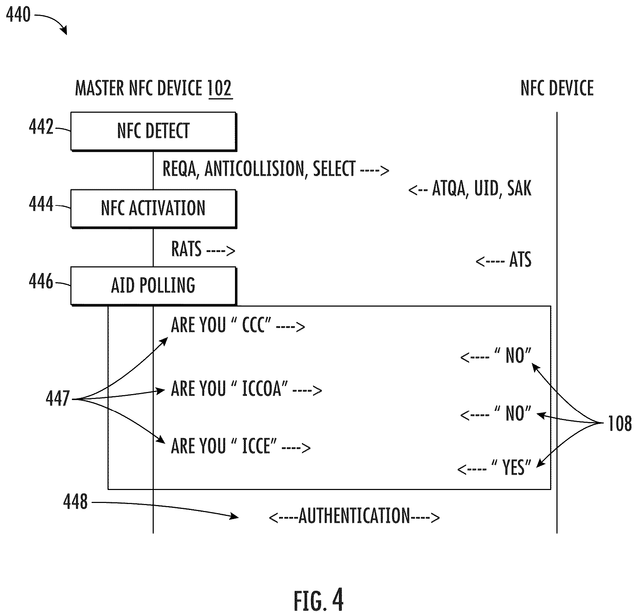

Each application configured to communicate over NFC is associated with an application ID (e.g., AID). An application ID comprises any alphanumeric string configured to uniquely identify an application. Some example application IDs are shown in the table of FIG. 4. A master NFC device 102 may identify an application operating on a nearby NFC tag device 104 by an application ID. Once the master NFC device 102 has identified the communicating application by application ID, the master NFC device 102 may configure NFC control signals 106 to comply with protocols, conventions, and procedures of the communicating application.

The application ID of a communicating application on an NFC tag device 104 is determined during the NFC application ID polling phase of an NFC transaction initialization. As described herein, a master NFC device 102 may support a plurality of applications. In general, a master NFC device 102 may begin the NFC application ID polling phase by transmitting an application ID and listening for an NFC responsive signal 108 from an NFC tag device 104 affirming or denying the application ID as associated with an application supported by the NFC tag device 104. An NFC tag device 104 in accordance with the present disclosure responds to an NFC control signal 106 containing an application identifier polling command with an NFC responsive signal 108 comprising an application ID of an application supported by the NFC tag device 104. As described herein, the master NFC device 102 is configured to receive the NFC responsive signal 108 from the NFC tag device 104 comprising the application ID of the supported application and configure the master NFC device 102 for communication in accordance with the supported application protocols, conventions, and procedures. In this way, the master NFC device 102 does not have to continue to cycle through the list of applications supported by the master NFC device 102 to determine the application supported by the NFC tag device 104.

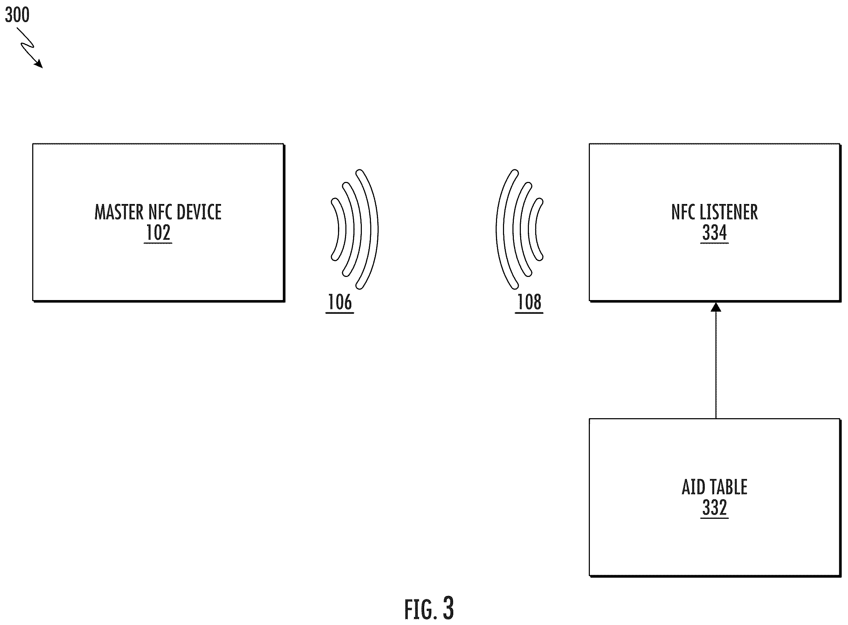

In some embodiments, the NFC tag device 104 may support a plurality of applications comprising a plurality of application IDs. As described in relation to FIG. 3, the NFC tag device 104 may access an application ID table 772 to determine an application ID of a supported application to transmit to the master NFC device 102.

Referring now to FIG. 2, an example embodiment of an NFC system 200 is provided. As depicted in FIG. 2, the example NFC system 200 includes a master NFC device 102 and an NFC card emulation device 220. The master NFC device 102 is configured to transmit NFC control signals 106 to the NFC card emulation device 220 and receive NFC responsive signals 108 from the NFC card emulation device 220.

As depicted in FIG. 2, the example NFC system 200 includes a master NFC device 102. As described herein, the master NFC device 102 includes one or more electromagnetic coils configured to generate an electromagnetic radio frequency field to facilitate the transmission of data encoded in radio frequency waves and/or electromagnetic fields (e.g., NFC control signals 106). The master NFC device 102 may be referred to as an NFC reader, NFC emitter, NFC initiator, NFC poller, or another similar name. The master NFC device 102 is configured with a power source to generate the electromagnetic radio frequency field.

A master NFC device 102 is further configured to initiate an NFC transaction initialization process upon detection of an NFC enabled device (e.g., NFC card emulation device 220) in the vicinity of the master NFC device 102. An NFC transaction initialization process may include various initialization phases, for example, an NFC detect phase, an NFC activation phase, an NFC application ID polling phase, and an NFC authentication phase.

During the NFC application ID polling phase, the master NFC device 102 transmits application identifier polling commands of application IDs supported by the master NFC device 102. An application identifier polling command may be any NFC control signal 106 transmitted by the master NFC device 102 to indicate an application supported by the master NFC device 102. For example, the master NFC device 102 may support a plurality of applications, each identified by a unique application ID. The master NFC device 102 may be configured to traverse the list of supported applications and transmit an application identifier polling command with an application ID of a supported application one at a time. Between transmission of each application ID, the master NFC device 102 may listen for an NFC responsive signal 108 indicating if the particular application, identified by the application ID, is supported by the NFC card emulation device 220.

As further depicted in FIG. 2, the NFC system 100 includes an NFC card emulation device 220. An NFC card emulation device 220 includes one or more electrical components comprising at least an NFC transceiver configured to emulate an NFC card and/or NFC tag in support of receipt of NFC control signals 106 from a master NFC device 102 and transmission of NFC responsive signals 108. For example, an NFC card emulation device 220 execute NFC transactions with a master NFC device 102, just as a master NFC device 102 would execute transactions with an NFC card or NFC tag (e.g., NFC tag device 104). An NFC card emulation device 220 includes a power source enabling the NFC card emulation device 220 to generate radio frequency waves in support of an NFC transaction. In some embodiments, the NFC card emulation device 220 may comprise a mobile communication device, such as a mobile phone, laptop, scanner, tablet, etc.

An NFC card emulation device 220 may comprise one or more supported applications configured to execute NFC transactions with a master NFC device 102. An application may include standard protocols and procedures defining the parameters of the NFC transaction between the master NFC device 102 and the application on the NFC card emulation device 220. Each supported application of the NFC card emulation device 220 may be associated with a unique application ID. A master NFC device 102 may identify a supported application operating on a nearby NFC card emulation device 220 by an application ID. Once the master NFC device 102 has identified the supported application by application ID, the master NFC device 102 may configure NFC control signals 106 to comply with protocols, conventions, and procedures of the supported application.

The application ID of a supported application on an NFC card emulation device 220 configured to participate in an NFC transaction is determined during the NFC application ID polling phase of an NFC transaction initialization. As described herein, a master NFC device 102 may transmit a plurality of application identifier polling commands including application IDs supported by the master NFC device 102, one at a time, to determine whether the NFC card emulation device 220 supports the application associated with the transmitted application ID. The process of querying an NFC card emulation device 220 with respect to each application ID supported by the master NFC device 102 may consume time during initialization of the NFC transaction.

An NFC card emulation device 220 in accordance with the present disclosure may respond to an NFC control signal 106 containing an application identifier polling command with an NFC responsive signal 108 comprising an application ID of an application supported by the NFC card emulation device 220. As described herein, the master NFC device 102 is configured to receive the NFC responsive signal 108 from the NFC card emulation device 220 comprising the application ID of the supported application and configure the master NFC device 102 for communication in accordance with the supported application protocols, conventions, and procedures. In this way, the master NFC device 102 does not have to continue to cycle through the list of applications supported by the master NFC device 102 to determine the application supported by the NFC card emulation device 220.

In some embodiments, the NFC card emulation device 220 may provide a truncated application identifier based on the application IDs supported by the master NFC device 102 and indicated in the NFC control signals 106. For example, a master NFC device 102 may support a subset of application IDs, for example, application ID "1234," "2345," and "3456." In such an instance, the NFC card emulation device 220 may respond with a truncated application identifier comprising the portion of the application ID necessary to identify the application ID supported by the NFC card emulation device 220. For example, the NFC card emulation device 220 may simply respond with a "2," indicating the application ID for application "2345."

Referring now to FIG. 3, an example embodiment of an NFC system 300 is provided. As depicted in FIG. 3, the example NFC system 300 includes a master NFC device 102 and an NFC listener 334. The master NFC device 102 is configured to transmit NFC control signals 106 to the NFC listener 334 and receive NFC responsive signals 108 from the NFC listener 334. As further depicted in FIG. 3, the NFC listener 334 is electrically connected to an application ID table 332.

As depicted in FIG. 3, the example NFC system 200 includes a master NFC device 102. As described herein, the master NFC device 102 includes one or more electromagnetic coils configured to generate an electromagnetic radio frequency field to facilitate the transmission of data encoded in radio frequency waves and/or electromagnetic fields (e.g., NFC control signals 106). The master NFC device 102 may be referred to as an NFC reader, NFC emitter, NFC initiator, NFC poller, or another similar name. The master NFC device 102 is configured with a power source to generate the electromagnetic radio frequency field.

The master NFC device 102 is further configured to initiate an NFC transaction initialization process upon detection of an NFC enabled device (e.g., NFC listener 334) in the vicinity of the master NFC device 102. An NFC transaction initialization process may include various initialization phases, for example, an NFC detect phase, an NFC activation phase, an NFC application ID polling phase, and an NFC authentication phase.

During the NFC application ID polling phase, the master NFC device 102 transmits application identifier polling commands, one by one, comprising applications supported by the master NFC device 102. The master NFC device 102 may be configured to traverse the list of supported applications and transmit an application identifier polling command with an application ID of a supported application for each supported application in sequence. Between transmission of each application identifier polling command, the master NFC device 102 may listen for an NFC responsive signal 108 indicating if the particular application, identified by the application ID, is supported by the NFC listener 334.

As further depicted in FIG. 3, the NFC system 300 includes an NFC listener 334. An NFC listener 334 comprises any NFC device comprising at least an NFC transceiver configured to transmit NFC responsive signals 108 in response to NFC control signals 106 transmitted by a master NFC device 102. For example, an NFC listener may comprise an NFC tag device 104 (as described in relation to FIG. 1) or an NFC card emulation device 220 (as described in relation to FIG. 2).

An NFC listener 334 may comprise one or more supported applications configured to execute NFC transactions with a master NFC device 102. An application may include standard protocols and procedures defining the parameters of the NFC transaction between the master NFC device 102 and the application on the NFC listener 334. Each supported application of the NFC listener 334 may be associated with a unique application ID. A master NFC device 102 may identify a supported application operating on a nearby NFC listener 334 by an application ID. Once the master NFC device 102 has identified the supported application by application ID, the master NFC device 102 may configure NFC control signals 106 to comply with protocols, conventions, and procedures of the supported application.

The application ID of a supported application on an NFC listener 334 configured to participate in an NFC transaction is determined during the NFC application ID polling phase of an NFC transaction initialization. As described herein, a master NFC device 102 may transmit a plurality of application identifier polling commands including application IDs supported by the master NFC device 102, one at a time, to determine whether the NFC listener 334 supports the application associated with the transmitted application ID. The process of querying an NFC listener 334 with respect to each application ID supported by the master NFC device 102 may consume time during initialization of the NFC transaction.

An NFC listener 334 in accordance with the present disclosure may respond to an NFC control signal 106 containing an application identifier polling command with an NFC responsive signal 108 comprising an application ID of an application supported by the NFC listener 334. As described herein, the master NFC device 102 is configured to receive the NFC responsive signal 108 from the NFC listener 334 comprising the application ID of the supported application and configure the master NFC device 102 for communication in accordance with the supported application protocols, conventions, and procedures. In this way, the master NFC device 102 does not have to continue to cycle through the list of applications supported by the master NFC device 102 to determine the application supported by the NFC listener 334.

As further depicted in FIG. 3, the NFC system 300 includes an application ID table 332. An application ID table 332 comprises any storage device configured to store one or more application IDs. A storage device may comprise a memory device, look-up table, or the like. In some embodiments, the application ID table 332 may include a list of application IDs associated with applications supported by the NFC listener 334. For example, if the NFC listener 334 supports three different NFC applications, the application ID table 332 may comprise the application IDs for the three supported applications. The NFC listener 334 may access the application ID table 332 to select an application ID to transmit in an NFC responsive signal 108 in response to an application identifier polling command.

In some embodiments, the application IDs in the application ID table 332 may be associated with an application type, or sub-type. In such an embodiment, the NFC listener 334 may determine an application type or application sub-type of an application ID transmitted by a master NFC device 102 in an application identifier polling command. The NFC listener 334 may then choose the application ID to be transmitted in an NFC responsive signal 108 based on the application type or sub-type of the application ID. For example, in an instance in which an application ID for a first payment application is sent, the NFC listener 334 may determine the application type of the application ID, for example, payment applications. In an instance in which the first payment application is not supported by the NFC listener 334, the NFC listener 334 may access the application ID table 332 and any application IDs supported by the NFC listener 334 of the same application type or sub-type. The NFC listener 334 may then transmit one or more of the application IDs supported by the NFC listener 334, and of the same application type or sub-type, to the master NFC device 102.

In some embodiments, application IDs of unsupported applications may be stored in the application ID table 332 and associated with supported application IDs. Such that in an instance in which the stored, unsupported application ID is received, the associated application ID supported by the NFC listener 334 may be accessed.

Referring now to FIG. 4, an example NFC transaction initialization process 440 is depicted. As depicted in FIG. 4, the example NFC transaction initialization process 440 includes an NFC detect phase 442, an NFC activation phase 444, an NFC application ID polling phase 446, and an NFC authentication phase 448.

During an NFC detect phase 442, the master NFC device 102 may use various processes to detect the presence of a potential nearby NFC devices. For example, a master NFC device 102 may utilize the transmission of one or more wake-up signals and monitor changes in the electrical parameters in or around the master NFC device 102 to determine if a potential NFC device is within a transmission distance.

Once a nearby NFC listener device is detected, the master NFC device 102 may transmit various polling commands to obtain characteristics of the NFC device necessary to complete the NFC transaction. For example, a master NFC device 102 may transmit multiple polling commands configured to communicate with different types of NFC listener devices, for example type A cards, type B cards, type F cards, type V cards, etc. A polling command is used by the master NFC device 102 to detect valid NFC devices within transmission proximity of the master NFC device 102.

During the NFC detect phase 442, the master NFC device 102 and the NFC device may exchange various NFC signals to coordinate the NFC transaction. For example, the master NFC device 102 may transmit anti-collision signals, such as an REQA signal (e.g., NFC control signals 106). The master NFC device 102 may then receive NFC responsive signals (e.g., NFC responsive signals 108) from the NFC listener, such as ATQA, UID, and SAK signals.

The NFC transaction initialization process may further include an NFC activation phase 444. During the NFC activation phase 444 the master NFC device 102 utilizes the UID provided by a selected NFC device to activate the selected NFC device. The NFC activation phase 444 may include transmission of a request for answer to select (RATS) (e.g., NFC control signal 106) by the master NFC device 102 and an answer to select (ATS) NFC responsive signal 108 by the NFC device.

The NFC transaction initialization may continue with an NFC application ID polling phase 446. During the NFC application ID polling phase 446, the master NFC device 102 transmits application identifier polling commands 447 comprising application IDs of applications supported by the master NFC device 102. An application identifier polling command 447 may be any NFC control signal 106 transmitted by the master NFC device 102 to indicate an application supported by the master NFC device 102. For example, the master NFC device 102 may support a plurality of applications, each identified by a unique application ID. The master NFC device 102 may be configured to traverse the list of supported applications and transmit an application identifier polling command 447 with an application ID of a supported application one at a time. Between transmission of each application ID, the master NFC device 102 may listen for an NFC responsive signal 108 indicating if the particular application, identified by the application ID, is supported by the NFC device.

The NFC transaction initialization completes with an NFC authentication phase 448. During the NFC authentication phase 448, the master NFC device 102 and NFC device exchange various NFC signals to authenticate and/or secure the NFC transaction.

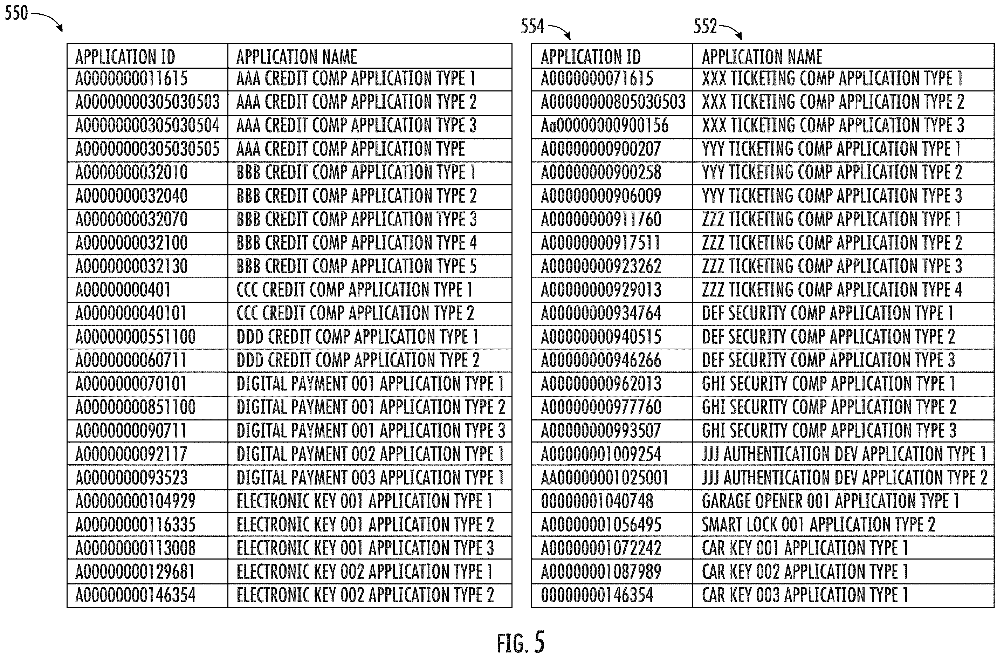

Referring now to FIG. 5, an example application ID list 550 is provided. As depicted in FIG. 5, each application 552 configured to communicate using NFC is associated with a unique application ID 554. An application ID 554 comprises any alphanumeric string configured to uniquely identify an application 552. A master NFC device (e.g., master NFC device 102) may identify an application 552 operating on a nearby NFC device by an application ID 554. For example, to query if a nearby NFC device supports the "Discover" application, the master NFC device may transmit an application ID 554 of "A0000001524010" to the NFC device. Once the master NFC device 102 has identified the communicating application 552 by application ID 554, the master NFC device 102 may configure NFC control signals to comply with protocols, conventions, and procedures of the communicating application 552.

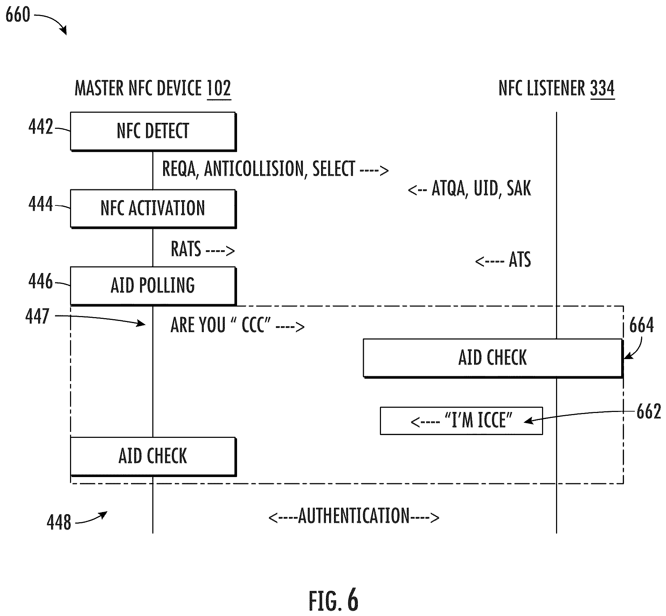

Referring now to FIG. 6, an example NFC transaction initialization 660 in accordance with one or more embodiments of the present disclosure is depicted. As depicted in FIG. 6, the example NFC transaction initialization 660 occurs between a master NFC device 102 and an NFC listener 334 (e.g., NFC tag device 104, NFC card emulation device 220). The example NFC transaction initialization 660 includes an NFC detect phase 442, an NFC activation phase 444, an NFC application ID polling phase 446, and an NFC authentication phase 448. As further depicted in FIG. 6, the NFC listener 334 is configured to transmit an application ID response signal 662 in response to an application identifier polling command 447.

As depicted in FIG. 6, the NFC transaction initialization includes an NFC application ID polling phase 446, during which the master NFC device 102 transmits an application identifier polling command 447 comprising an application ID of an application supported by the master NFC device 102. In an instance in which the application ID is not supported by the NFC listener 334, or the NFC listener wishes to communication with a different application, the NFC listener 334 may respond with an application ID response signal 662. An application ID response signal 662 comprises any NFC responsive signal (e.g., NFC responsive signal 108) transmitted by an NFC listener 334 during the NFC application ID polling phase 446 of an NFC transaction initialization 660 and indicating an application ID associated with an application supported by the NFC listener 334. For example, the master NFC device 102 may transmit an application identifier polling command 447 comprising an application ID (e.g., "001130"). The NFC listener 334 may perform an application ID check 664 and determine the application ID "001130" is not supported. In response, the NFC listener 334 may transmit an application ID response signal 662 comprising an application ID (e.g., "000607") associated with an application supported by the NFC listener 334.

In some embodiments, the NFC listener 334 may be configured to access an application ID table (e.g., application ID table 332) comprising a list of application IDs supported by the NFC listener 334. Upon receiving an application identifier polling command 447 comprising an application ID, the NFC listener 334 may access the application ID table during the application ID check 664. In an instance in which the application ID transmitted by the master NFC device 102 is not stored in the application ID table, the NFC listener 334 may select another application ID from the application ID table that is supported by the NFC listener 334 to be transmitted in an application ID response signal 662.

As further described in relation to FIG. 3, the application ID table may include various associations between supported and unsupported application IDs. For example, application IDs may be stored in association with application types and sub-types. Thus, in an instance in which an unsupported application ID of a first application type is received, the NFC listener may access an application ID of the same application type from the application ID table and transmit the application ID associated with an application supported by the NFC listener 334 in the application ID response signal 662.

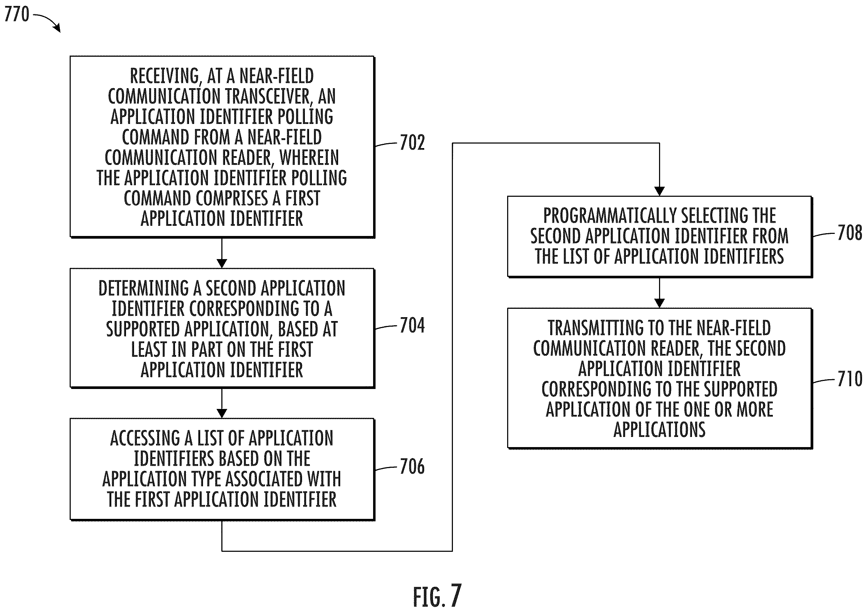

Referring now to FIG. 7, an example process 770 for initializing an NFC application protocol at an NFC listener (e.g., NFC listener 334, NFC tag device 104, NFC card emulation device 220) is provided. At block 702, the NFC listener receives, at an NFC transceiver, an application ID polling command (e.g., application ID polling command 447) from an NFC reader (e.g., master NFC device 102), wherein the application ID polling command comprises a first application ID (e.g., application ID 554). As described herein, an NFC listener may be configured with an NFC transceiver to support transmission of NFC responsive signal 108 and reception of NFC control signals from an NFC reader, in accordance with an NFC protocol. As part of an NFC transaction initialization, the NFC reader may initiate an NFC application ID polling phase. During the NFC application ID polling phase, the NFC reader may transmit application ID polling commands comprising application IDs (e.g., first application ID) corresponding to applications supported by the NFC reader.

At block 704, the NFC listener determines a second application ID corresponding to a supported application, based at least in part on the first application ID. In an instance in which the NFC listener does not support the first application ID transmitted by the NFC reader, the NFC listener may determine a second application ID corresponding to an application supported by the NFC listener and associated with the first application ID.

At block 706, the NFC listener accesses a list of application IDs (e.g., application ID table 332) based on the application type associated with the first application ID. For example, the NFC listener may access an application ID table comprising correlations between application IDs. For example, application IDs supported by the NFC listener may be associated with an application type or sub-type. Upon determining the type of the first application ID, the NFC listener may select a second application ID associated with the same application type and supported by the NFC listener.

At block 708, the NFC listener transmits to the NFC reader, the second application ID corresponding to the supported application of the one or more applications. As described herein, the NFC listener may be configured to transmit one or more application ID response signals (e.g., application ID response signal 662) to the NFC reader comprising the second application ID.

While this detailed description has set forth some embodiments of the present invention, the appended claims cover other embodiments of the present invention which differ from the described embodiments according to various modifications and improvements. For example, one skilled in the art may recognize that such principles may be applied to any NFC listening device supporting multiple NFC applications, for example, a keyless entry device, a ticketing device, a payment device, and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of' Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A near-field communication tag device, comprising:
one or more applications, wherein each of the one or more applications comprises a unique application identifier; and
a near-field communication transceiver, configured to:
receive an application identifier polling command from a near-field communication reader, wherein the application identifier polling command comprises a first application identifier; and
transmit a second application identifier corresponding to a supported application of the one or more applications.

2. A near-field communication card emulation device, comprising:
one or more applications, wherein each of the one or more applications comprises a unique application identifier; and
a near-field communication transceiver, configured to:
receive an application identifier polling command from a near-field communication reader, wherein the application identifier polling command comprises a first application identifier; and
transmit a second application identifier corresponding to a supported application of the one or more applications.

3. The near-field communication tag device of claim 1, or the near-field communication card emulation device of claim 2, wherein the second application identifier is transmitted to the near-field communication reader during an application identifier polling phase of a near-field communication transaction initialization.

4. The near-field communication tag device of claim 1 or 3 or the near-field communication card emulation device of claim 2 or 3, wherein the second application identifier is a truncated application identifier.

5. The near-field communication tag device of any of claims 1, 3 and 4 or the near-field communication card emulation device of any of claims 2 to 4, further comprising:
a memory device, wherein the memory device comprises a table of one or more application identifiers.

6. The near-field communication tag device or the near-field communication card emulation device of claim 5, wherein the table of one or more application identifiers comprises associations between a plurality of application identifiers.

7. The near-field communication tag device or the near-field communication card emulation device of claim 6, wherein the associations are based on an application type associated with the plurality of application identifiers.

8. The near-field communication tag device or the near-field communication card emulation device of claim 7, wherein the second application identifier associated with the supported application is selected based on the application type of the first application identifier.

9. The near-field communication card emulation device of any of claims 2 to 8, wherein the near-field communication card emulation device comprises a mobile communication device.

10. A method for initializing an NFC application protocol at a near-field communication listener comprising one or more applications, the method comprising:
receiving, at a near-field communication transceiver, an application identifier polling command from a near-field communication reader, wherein the application identifier polling command comprises a first application identifier;
determining a second application identifier corresponding to a supported application, based at least in part on the first application identifier; and
transmitting to the near-field communication reader, the second application identifier corresponding to the supported application of the one or more applications.

11. The method of claim 10, wherein the second application identifier is transmitted to the near-field communication reader during an application identifier polling phase of a near-field communication initialization.

12. The method of claim 10 or 11, wherein the second application identifier is a truncated application identifier.

13. The method of any of claims 10 to 12, further comprising:
storing a table comprising associations between a plurality of application identifiers at a memory device, wherein the associations are based on an application type associated with the plurality of application identifiers.

14. The method of claim 13, wherein determining the second application identifier further comprises:
accessing a list of application identifiers based on the application type associated with the first application identifier; and
programmatically selecting the second application identifier from the list of application identifiers.
